# EUROPÄISCHE PATENTANMELDUNG

(11) **EP 0 807 555 A2**
(43) Veröffentlichungstag der Anmeldung: **19.11.1997**
(21) Anmeldenummer: 97105006.7
(22) Anmeldetag: 25.03.1997
(51) Int. Cl.: B60R 21/06

(54) **Schutzvorrichtung für Kombifahrzeuge**

(30) Priorität: 15.05.1996 DE 19619642
(71) Anmelder: DAIMLER-BENZ AKTIENGESELLSCHAFT, 70567 Stuttgart (DE)
(72) Erfinder: Hennig von Lange, Eberhard, 71067 Sindelfingen (DE); Tsilchorozidis, Georgios, 70195 Stuttgart (DE)

(57) **Zusammenfassung**

Die Erfindung betrifft eine Schutzvorrichtung (30) für Kombifahrzeuge zum Abtrennen eines bestuhlten Fahrgastraumes gegenüber einem dahinterliegenden Laderaum, die hierzu ein einen Freibereich oberhalb der Bestuhlungsrückenlehne (20) bis zum Fahrzeugdach (14) überspannendes Sicherheitsnetz (31) aufweist, das über ein oberes und unteres Querrohr (35,33) im Fahrzeug verspannt ist. Zur Erfüllung der Normvorgaben bezüglich der Festigkeit der Schutzvorrichtung und zur universellen Verwendbarkeit in Kombifahrzeugen ist das obere Querrohr (35) oberer Rahmenteil (32¹) eines etwa trapezförmigen Rahmens (32), dessen dazu paralleler unterer Rahmenteil (32²) in Fahrtrichtung gesehen hinter dem Sicherheitsnetz lose an diesem anliegt. Im Bereich des unteren Rahmenteils (32²) ist der Rahmen mittels Befestigungselemente (37) am Dachrahmen (13) mit Abstand vom Fahrzeugdach (14) gehalten, der kleiner als die Rahmenhöhe bemessen ist. Das untere Querrohr (33) liegt unterhalb der Oberkante der Bestuhlungsrücklehnen und ist mittels Gurtbänder (40) fahrzeugbodenseitig verspannt.

## Beschreibung

Die Erfindung betrifft eine Schutzvorrichtung für Kombifahrzeuge zum Abtrennen eines bestuhlten Fahrgastraums gegenüber einem in Fahrtrichtung dahinterliegenden Laderaum gemäß dem Oberbegriff des Patentanspruchs 1.

Bei einer bekannten Schutzvorrichtung dieser Art (DE 43 28 746 A1) trägt das obere Querrohr endseitig zwei pilzartige Köpfe, mit denen es beidseitig in entsprechenden Taschen der beiden C-Säulen hinter dem Fondsitz des Kombifahrzeugs eingehängt ist. Das untere Querrohr ist über zwei verstellbare Schnallen in Bügeln verankert, die sich am Boden des Laderaums oder in der Rückenlehne des Fondsitzes befinden. Zum Aufnehmen von Spannungsspitzen an den beiden seitlichen Rändern des Sicherheitsnetzes, die im Crashfall durch Verformung der Karosserie bzw. der Verankerungseinrichtungen des Sicherheitsnetzes auftreten und zum Reißen des Sicherheitsnetzes führen können, sind Längenausgleichsmittel in Form von abgenähten Falten vorgesehen, die aufreißen und unter Kraftverzehr eine Längung des Sicherheitsnetzes ermöglichen. Letzlich werden die vom Sicherheitsnetz aufgenommene Kräfte über das obere Querrohr in die C-Säulen und über das untere Querrohr und die Schnellen und Bügel in den Fahrzeugboden der Karosserie eingeleitet, wodurch die jeweiligen Verankerungspunkte stark belastet werden.

Der Erfindung liebt die Aufgabe zugrunde, eine Schutzvorrichtung der eingangs genannten Art so zu verbessern, daß sie in Kombifahrzeugen unabhängig von deren Dachausführung (Hochdach/Niedrigdach) einsetzbar ist und die Kräfte, die bei Belastung der Schutzvorrichtung auftreten, derart verteilt in die Karosserie einleitet, daß die Verankerungspunkte geringer belastet sind.

Die Aufgabe ist bei einer Schutzvorrichtung für Kombifahrzeuge der im Oberbegriff des Patentanspruchs 1 definierten Gattung erfindungsgemäß durch die Merkmale im Kennzeichenteil des Anspruchs 1 gelöst.

Die erfindungsgemäße Schutzvorrichtung hat den Vorteil, daß der Rohrrahmen, an dessen oberem Rahmenteil das Sicherheitsnetz befestigt und von dessen unterem Rahmenteil das Sicherheitsnetz lediglich umgelenkt wird und der selbst mittels der Befestigungselemente am Fahrzeug-Dachrahmen gehalten ist, beim Abhalten des im Crashfall nach vorn rutschenden Ladeguts keiner Biegebelastung ausgesetzt wird. Das durch die Massenkräfte der Ladung belastete Sicherheitsnetz verformt sich und hebt sich vom unteren Rahmenteil ab. Dabei zieht das sich verformende Sicherheitsnetz den oberen Rahmenteil nach vorn, wodurch dieser weiter nach oben gedrückt wird und sich oben am Fahrzeugdach abstützt. Die Abstützkräfte werden damit oben vom Dachblech bzw. der Dachverkleidung und vom Dachrahmen aufgefangen. Die sich selbst ausrichtenden Befestigungselemente geben dabei nach, so daß nur geringe Kräfte vom unteren Rahmenteil in den Dachrahmen eingeleitet werden und hierfür im Dachrahmen vorgesehene Verankerungspunkte nicht hochfest ausgeführt werden müssen. Unten werden die auf das Sicherheitsnetz wirkenden Kräfte vom unteren Querrohr über die Gurtbänder direkt oder über die Sitzfüße der Fahrzeugbestuhlung, die am Boden verankert sind, in den Fahrzeugboden eingeleitet. Durch dieses Verhalten der Schutzvorrichtung mit der damit erzielten Krafteinleitung und Belastungverteilung kann die nach Norm vorgeschriebene Belastungsaufnahme sichergestellt werden, ohne daß kostenintensive Versteifungsmaßnahmen an Fahrzeug und an der Schutzvorrichtung selbst erforderlich sind. Die Schutzvorrichtung bleibt leichtgewichtig und läßt sich schnell und problemlos montieren und demontieren, da lediglich die elastischen Elemente am unteren Rahmenteil des Rohrrahmens in entsprechende, am Fahrzeug vorgesehene Augen oder Ösen eingehängt und die Gurtbänder mittels der Gurtspanner am Fahrzeugboden verspannt werden müssen. Die beim Verspannen hervorgerufenen Zugkräfte am Sicherheitsnetz zwingen den Rohrrahmen zu einer Schwenkbewegung um seine durch die sich selbst ausrichtenden Befestigungselemente vorgegebenen Dachangriffspunkte, bis der obere Rahmenteil an der Dachverkleidung anliegt. Die Schutzvorrichtung ist für Niedrig- oder Hochdachausführung des Kombifahrzeugs gleich gut geeignet, da der Rohrrahmen mit dem unteren Rahmenteil am Dachrahmen befestigt und in Richtung zum Laderaum abgewinkelt verläuft. Je nach Dachhöhe ist die Abwinklung des Rohrrahmens gegenüber der Vertikalen größer oder kleiner. In beiden Fällen wird bei Netzbelastung die Abstützung des oberen Rahmenteils an der Dachverkleidung bzw. dem Dachhimmel erreicht.

Vorteilhafte Ausführungsformen der erfindungsgemäßen Schutzvorrichtung mit zweckmäßigen Weiterbildungen und Ausgestaltungen der Erfindung sind in den weiteren Patentansprüchen angegebenen.

Gemäß einer vorteilhaften Ausführungsform der Erfindung sind die Befestigungselemente als Drahtseile mit Karabinerhaken zum Einhängen in am Dachrahmen des Kombifahrzeugs auf beiden Längsseiten vorgesehenen Augenschrauben oder Ösen ausgebildet. Alternativ werden als Befestigungselemente Halteeinheiten eingesetzt, die ein Drehen des Rohrrahmens um seinen unteren Rahmenteil erlauben. Diese bestehen jeweils aus einer am Dachrahmen festgelegten Lasche, einem in der Lasche in Vertikalrichtung, also hin zum Fahrzeugdach, schwenkbaren Bügel und einem im Bügel gehaltenen Bolzen, der mit einem horizontal sich erstreckenden Bolzenende in das offene Stirnende des unteren Rahmenteils des Rohrrahmens mit Drehspiel hineinragt. Werden bei einer Fahrzeugbestuhlung mit mehreren hintereinander angeordneten Sitzreihen hinter jeder Sitzreihe des Dachrahmens zwei solche sich in Fahrzeugquerrichtung aneinander gegenüberliegende Augenschrauben oder Ösen bzw. Halteeinheiten vorgesehen, so kann der Laderaum in seiner Größe individuell variiert werden, indem nicht bestuhlte Sitzreihen in den Laderaum mit einbezogen werden. Im Extremfall kann die Schutzvorrichtung unmittelbar hinter Fahrer- und Beifahrersitz aufgespannt werden. Nicht zur Halterung benötigte Halteeinheiten werden nach Entfernen des Bolzens einfach an den Dachrahmen angeklappt.

Die Erfindung ist anhand eines in der Zeichnung dargestellten Ausführungsbeispiels im folgenden näher beschrieben. Es zeigen:
- Fig. 1: auszugsweise einen Längsschnitt eines Kombifahrzeugs in Niedrigdach- und Hochdachausführung mit einer Schutzvorrichtung zum Trennen von Fahrgast- und Laderaum,
- Fig. 2: einen Querschnitt des Kombifahrzeugs in Fig. 1 mit Draufsicht auf die nur teilweise dargestellte Schutzvorrichtung von hinten,
- Fig. 3: ausschnittweise eine Draufsicht der Schutzvorrichtung in Fig. 1 und 2,
- Fig. 4: eine Seitenansicht der Schutzvorrichtung in Fig. 3,
- Fig. 5: eine vergrößerte Darstellung des Ausschnittes V in Fig. 4,
- Fig. 6: eine vergrößerte Darstellung des Ausschnitts VI in Fig. 4 einer modifizierten Ausführungsform,
- Fig. 7: ausschnittweise den Dachbereich des Kombifahrzeugs mit einer modifizierten Ausführung eines Befestigungselements zur Anbindung der Schutzvorrichtung,
- Fig. 8: eine Ansicht des Befestigungselements ohne Bolzen in Richtung Pfeil VIII in Fig. 7,
- Fig. 9: eine Ansicht des Befestigungselements ohne Bolzen in Richtung Pfeil IX in Fig. 7.

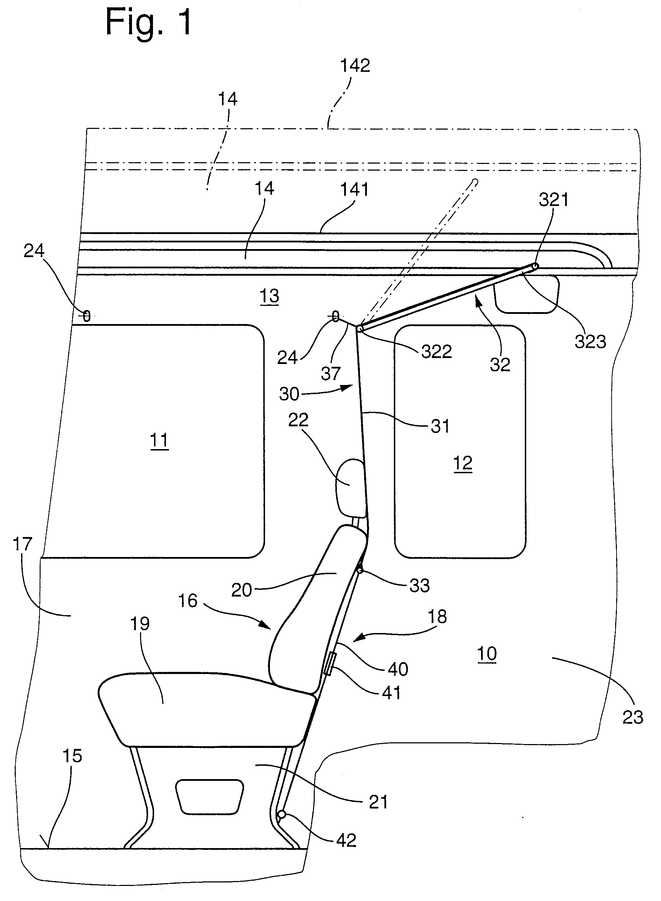

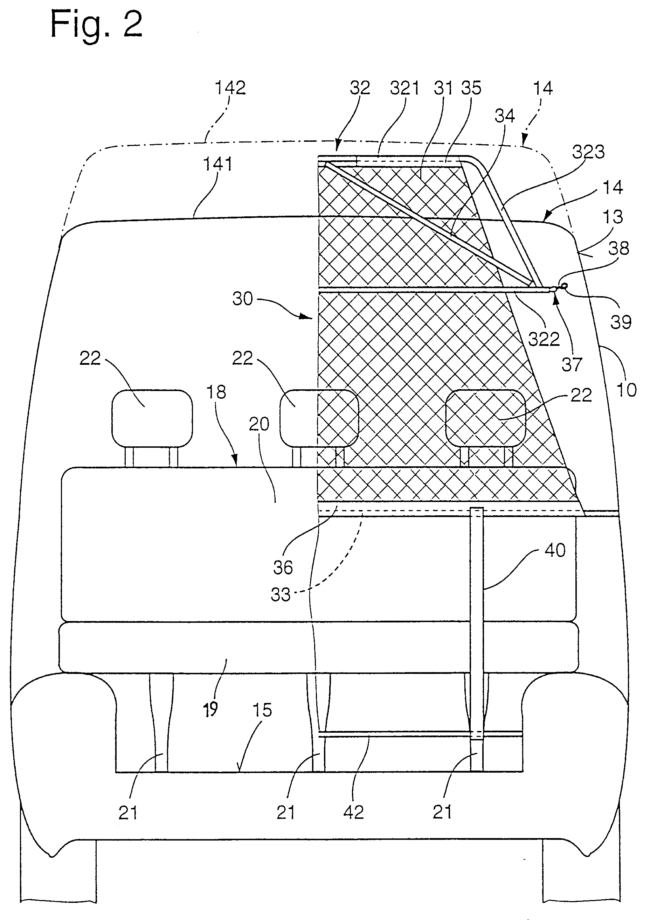

In Fig. 1 ist ausschnittweise ein Kombifahrzeug oder Kleintransporter im Längsschnitt dargestellt. Zu sehen ist die in Fahrtrichtung rechte Karosserieseitenwand 10 mit Seitenfenster 11 und 12. Dachrahmen 13, Fahrzeugdach 14, Fahrzeugboden 15 und Bestuhlung 16. Die Dachlinie des Fahrzeugdachs 14 in der Ausführung als Niedrigdach ist mit 141 und die Dachlinie in Ausführung des Fahrzeugdachs 14 als Hochdach ist mit 142 gekennzeichnet. Von der im sog. Fahrgastraum 17 angeordneten Bestuhlung 16 ist in Fig. 1 und 2 die letzte dreisitzige Sitzbank 18 von mehreren in Fahrzeuglängsrichtung hintereinander aufgereihten Sitzbänken zu sehen. Die in bekannter Weise aus Sitzteil 19 und Rückenlehne 20 bestehende Sitzbank 18 ist über drei Sitzfüße 21 am Fahrzeugboden 15 verankert. Jeder Sitzplatz der dreisitzigen Sitzbank 18 ist mit einer Kopfstütze 22 ausgestattet. Hinter der letzten Sitzbank 18 schließt sich an den Fahrgastraum 17 ohne Trennung ein Laderaum 23 zur Aufnahme von Ladegüter beliebiger Art an.

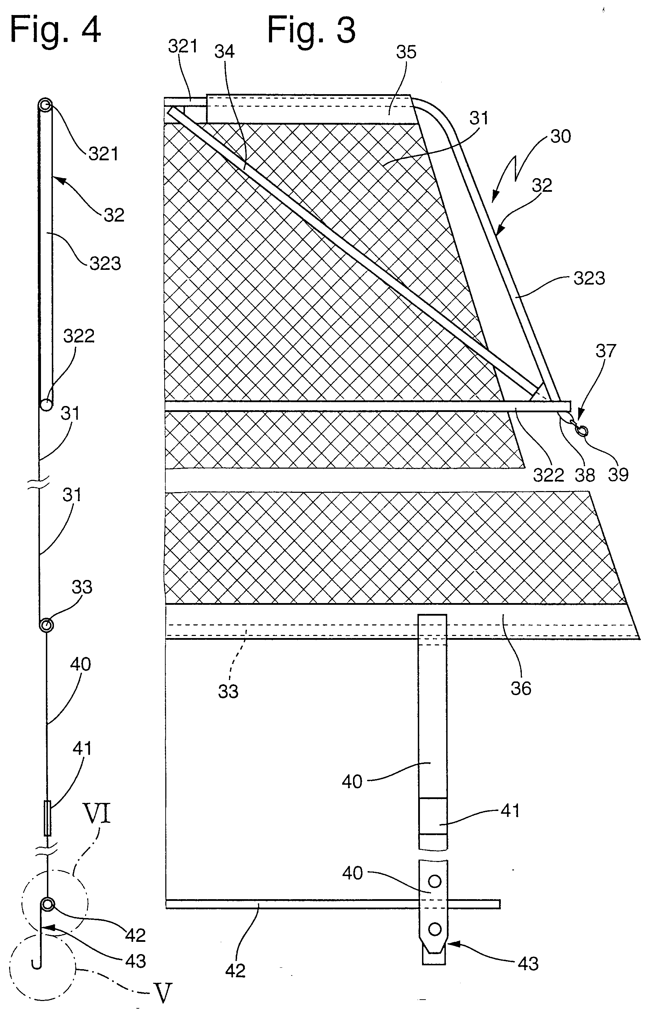

Zum Schutze der Fahrzeuginsassen gegen unbefestigtes Ladegut im Laderaum 23, das sich bei extremen Bremsungen oder im Crashfall unkontrolliert nach vorne in den Fahrgastraum 17 verlagert, ist der Fahrgastraum 17 gegenüber dem Laderaum 23 durch eine flexible und lösbare Schutzvorrichtung 30 getrennt, die schnell und einfach im Kombifahrzeug montiert und wieder demontiert werden kann. Die Schutzvorrichtung 30 weist ein Sicherheitsnetz 31 auf, das zwischen Fahrgastraum 17 und Laderaum 23 zwischen Fahrzeugdach 14 und Fahrzeugboden 15 aufgespannt ist und mindestens den Bereich zwischen der Oberkante der Rückenlehne 20 der Sitzbank 18 und dem Fahrzeugdach 14 überspannt. Die Schutzvorrichtung 30 ist in Fig. 2 und 3 halbseitig in Draufsicht und in Fig. 1 und 4 in Seitenansicht dargestellt. Zum Aufspannen des Sicherheitsnetzes 31 besitzt die Schutzvorrichtung 30 einen trapezförmigen Rohrrahmen 32, der sich aus einem oberen Rahmenteil 321, einem unteren Rahmenteil 322 und zwei die Rahmenteile 321,322 miteinander verbindenden schräg aufeinanderzu verlaufenden Seitenholme 323 zusammensetzt, und ein unteres Querrohr 33, das sich hinter der Rückenlehne 20, etwa 200 mm unterhalb der Oberkante der Rückenlehne 20 von der einen Karosserieseitenwand 10 bis zur anderen Karosserieseitenwand 10 erstreckt. Die Höhe des Rohrrahmens 32 ist größer gemacht als der Abstand zwischen dem Dachrahmen 13 und der Dachlinie 142 in der Ausführung des Fahrzeugdachs 14 als Hochdach. Zur Versteifung des Rohrrahmens 32 dienen zwei Querstreben 34, die sich jeweils etwa von der Mitte des oberen Rahmenteils 321 bis hin zum Knotenpunkt des unteren Rahmenteils 322 mit den beiden Seitenholmen 323 erstrecken. Das Sicherheitsnetz 31 ist über angenähte obere Schlaufen 35 am oberen Rahmenteil 321 und über ebensolche untere Schlaufen 36 am unteren Querrohr 33 befestigt. An beiden Enden trägt der untere Rahmenteil 322 sich selbst ausrichtende Befestigungselemente 37, die zum Befestigen des Rohrrahmens 32 am Dachrahmen 13 dienen. Im vorliegenden Ausführungsbeispiel sind die Befestigungselemente 37 als Drahtseile 38 mit Karabinerhaken 39 ausgebildet. Wie aus Fig. 1 ersichtlich, sind am Dachrahmen 13 Ösen 24 oder sog. Augenschrauben befestigt, in welche die Karabinerhaken 39 eingehängt werden können. Jeweils zwei Augenschrauben oder Ösen 24 sind in Fahrzeugquerrichtung einander gegenüberliegend hinter jeder Sitzbank 18 am Dachrahmen 13 vorgesehen, so daß die Schutzvorrichtung 30 an verschiedenen Plätzen im Fahrzeug angebracht werden kann und somit die durch sie festgelegten Zonen von Fahrgastraum 17 und Laderaum 23 in ihrer Größe variabel gestaltet werden können. Am unteren Querrohr 33 greifen zwei Gurtbänder 40 mit Gurtspanner 41 an, die am querrohrfernen Ende mittelbar oder unmittelbar am Fahrzeugboden 15 verankert werden (Fig. 1 - 4).

Zur Montage der Schutzvorrichtung 30 wird der Rohrrahmen 32 mit den am unteren Rahmenteil 322 mittels der Drahtseile 38 befestigten Karabinerhaken 39 in die beiden in Fahrzeugquerrichtung sich gegenüberliegenden Ösen 24 am Dachrahmen 13 eingehängt. Das endseitig am oberen Rahmenteil 321 befestigte Sicherheitsnetz 31 liegt lose auf dem unteren Rahmenteil 322 auf und wird von diesem umgelenkt. Der untere Rahmenteil 322 weist dabei zum Laderaum 23, während das Sicherheitsnetz 31 den unteren Rahmenteil 322 vom Fahrgastraum 17 her gesehen überdeckt. Das untere Querrohr 33 liegt unterhalb der Oberkante der Rückenlehne 20 der Sitzbank 18 an der Rückenlehne 20 an, Die beiden Gurtbänder 40 werden endseitig im Fahrzeugboden 15 mittel- oder unmittblar verankert, und das Sicherheitsnetz 31 wird durch die beiden Gurtspanner 41 in den Gurtbändern 40 gespannt. Die dadurch hervorgerufenen Zugkräfte zwingen den Rohrrahmen 32 zu einer Schwenkbewegung um seine von den beiden Drahtseilen 38 und Karabinerhaken 39 gebildeten, sich selbst ausrichtenden Dach-Aufhängepunkten, bis der obere Rahmenteil 321 an dem Fahrzeugdach 14 bzw. an der darunterliegenden Dachverkleidung anliegt.

Liegt auf der Ladefläche eine nicht gesicherte Ladung und das Kombifahrzeug wird extrem gebremst, so erfährt die Ladung eine Beschleunigung nach vorn, wobei sie vom Sicherheitsnetz 31 aufgefangen wird. Die Massenkräfte der Ladung belasten das Sicherheitsnetz 31, das sich verformt und von dem unteren Rahmenteil 322 des Rohrrahmens 32 abhebt. Diese Verformung des Sicherheitsnetzes 31 unterstützt die Schwenkbewegung des Rohrrahmens 32 nach vorn und durch die Belastung zieht der Rohrrahmen 32 an den sich selbst ausrichtenden Aufhängepunkten und stützt sich oben am Fahrzeugdach 14 ab. Die von der Ladung hervorgerufene Belastungskräfte werden damit vom Fahrzeugdach 14 und Dachrahmen 13 aufgefangen. Unten werden sie über das Querrohr 33 und die Gurtbänder 40 in den Fahrzeugboden 15 eingeleitet. Wie in Fig. 1 illustriert ist, ist die Schutzvorrichtung 30 unabhängig davon einbau- und funktionsfähig, ob das Kombifahrzeug mit Hochdach (Dachlinie 142) oder mit Niedrigdach (Dachlinie 141) ausgeführt ist. In beiden Fällen stützt sich beim Spannen des Sicherheitsnetzes durch die Gurtspanner 41 in den Gurtbändern 40 und durch die Belastung des Sicherheitsnetzes 31 durch sich nach vorn schiebendes Ladegut der Rohrrahmen 32 am Fahrzeugdach 14 ab. Bei der Niedrigdachausführung ist er dabei etwas flacher bei der Hochdachausführung etwas steiler gestellt. Letzteres ist in Fig. 1 durch strichpunktierte Darstellung des Rohrrahmens 32 angedeutet.

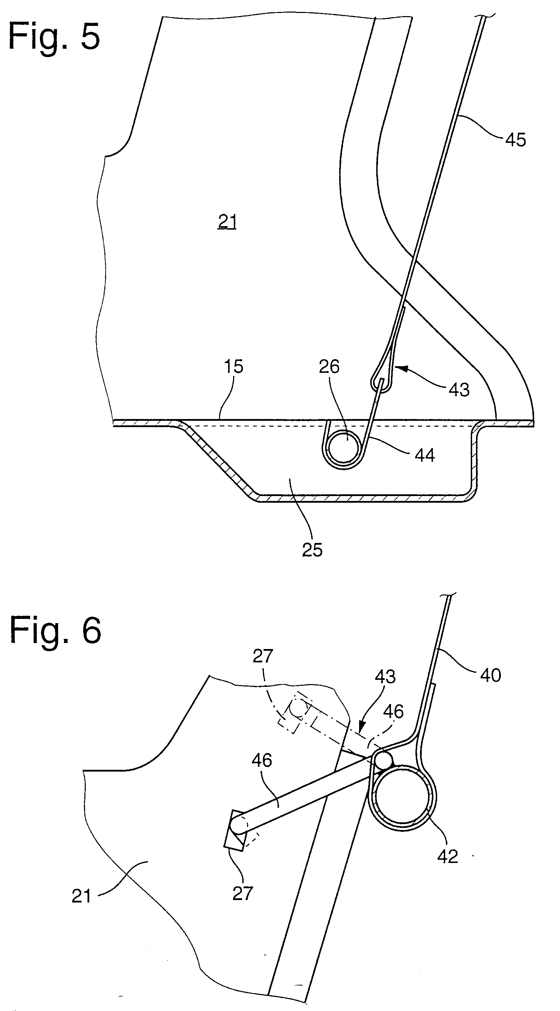

Die fahrzeugbodenseitige Festlegung der beiden am unteren Querrohr 33 angreifenden Gurtbänder 40 kann verschiedenen gestaltet sein. In allen Fällen sind die beiden am Querrohr 33 angreifenden Gurtbänder 40 endseitig an einem Verankerungsrohr 42 festgelegt, das unterhalb des Querrohrs 33 parallel und mit Abstand von diesem verläuft. Dieses Verankerungsrohr 42 wird mittels Verankerungselemente entweder direkt im Fahrzeugboden 15 an dort entsprechend vorgesehenen Verankerungsstellen festgelegt oder in entsprechenden Verankerungsstellen in den Sitzfüßen der Sitzbank 18 festgelegt, die ja ihrerseits am Fahrzeugboden 15 verankert sind. In dem Ausführungsbeispiel gemäß Fig. 1 - 4 sind die Verankerungselemente 43 als Haken 44 ausgebildet, die über Zugbänder 45 mit dem Verankerungsrohr 42 verbunden sind. In Fig. 5 ist vergrößert die Verankerung eines Hakens 44 im Fahrzeugboden 13 dargestellt. Unterhalb der Sitzbank 18 befindet sich in einer im Fahrzeugboden 15 ausgebildeten Mulde 25 ein Querbolzen 26, der zur Verankerung des Sitzfußes 21 am Fahrzeugboden 15 dient. An diesen Querbolzen 26 wird auch, und zwar bei gelösten Gurtspannern 41, der Haken 44 eingehängt, wie dies in Fig. 5 illustriert ist. Mittels der Gurtspanner 41 in den beiden Gurtbändern 44 kann nunmehr das Sicherheitsnetz 31 wie vorstehend beschrieben gespannt werden.

In einer in Fig. 6 dargestellten alternativen Ausführungsform der Verankerungselemente 43 sind diese als Drahtbügel 46 ausgeführt, die am Verankerungsrohr 42 angeschweißt sind. Dabei sind so viele Drahtbügel 46 angeschweißt, wie Sitzfüße 21 an der vor der Schutzvorrichtung 30 befindlichen Sitzbank 18 vorhanden sind. In jedem Sitzfuß 21 sind im hinteren oberen Bereich Formlöcher 27 vorgesehen, in die die Drahtbügel 46 mit abgewinkelten Drahtenden auf beiden Seiten des Sitzfußes 21 eingehängt sind.

Die vorstehend beschriebenen Verankerungselemente 43 für das Verankerungsrohr 42 können alternativ eingesetzt werden. Ist beispielsweise vor der Schutzvorrichtung 30 nicht eine dreisitzige Sitzbank 18 sondern nur eine zweisitzige Sitzbank angeordnet, so werden die beiden beschriebenen Ausführungsformen der Verankerungselemente 43 auch additiv verwendet. Links wird dann das Verankerungsrohr 42 über die Drahtbügel 46 in die Formlöcher 27 am Sitzfuß 21 eingehängt und rechts das Verankerungsrohr über Zugband 45 und Haken 44 im Fahrzeugboden 15 verankert. Wird die Schutzvorrichtung 30 unmittelbar hinter Fahrer- und Beifahrersitz angeordnet, so wird das Verankerungsrohr 42 über Zugbänder 45 und Haken 44 an den Sitzkästen der Vordersitze befestigt.

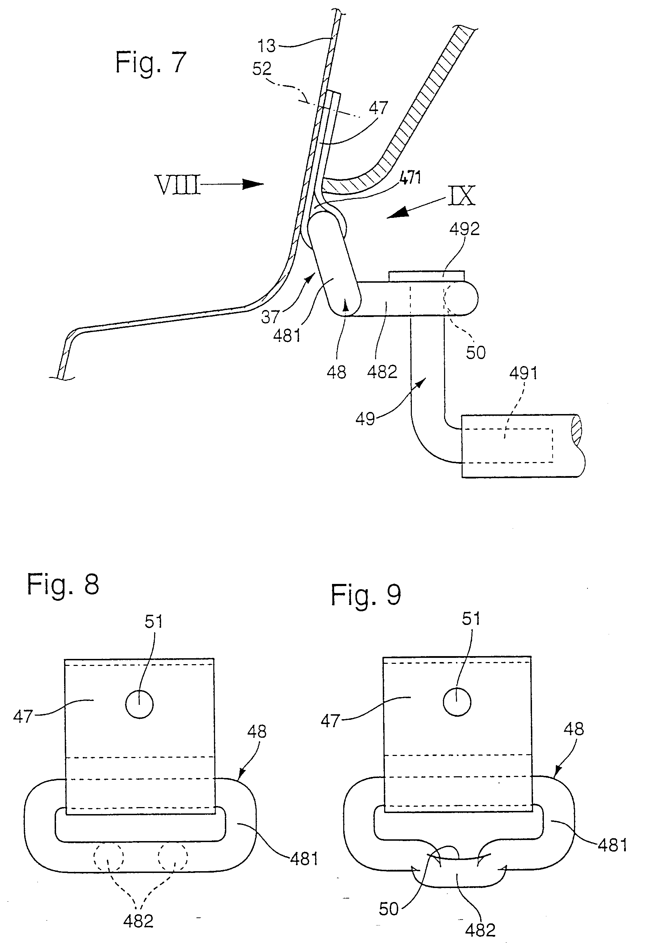

In Fig. 7 - 9 ist ein alternatives Befestigungselement 37 zum Befestigen des Rohrrahmens 32 am Dachrahmen 13 in verschiedenen Ansichten dargestellt. Dieses Befestigungselement 37 wird von einer zweiteiligen Halteeinheit gebildet, die es ermöglicht, daß sich der Rohrrahmen 32 um die Achse seines unteren Rahmenteils 322 schwenken und damit sich mit seinem oberen Rahmenteil 321 am Fahrzeugdach 14 abstützen kann. Im einzelnen setzt sich der eine Teil der Halteeinheit aus einer am Dachrahmen 13 des Fahrzeugs festgelegten Lasche 47 und einem in der Lasche 47 in Vertikalrichtung schwenkbaren Bügel 48 zusammen. Die Lasche 47 ist als umgebogenes Blechteil mit ausgebogenem Auge 471 ausgebildet und der Bügel als etwa T-förmiger Drahtbügel gebogen, dessen Querteil 481 im Auge 471 schwenkbar einliegt und dessen Mittelteil 482 eine Öffnung 50 aufweist. Wie aus Fig. 7 ersichtlich ist, sind Mittelteil 482 und Querteil 481 zueinander unter einem stumpfen Winkel von ca. 100° abgewinkelt. Zur Festlegung am Dachrahmen 13 ist in der Lasche 47 eine Durchgangsbohrung 51, alternativ zwei im Abstand voneinander angeordnete Durchgangsbohrungen, vorgesehen, durch welche eine Kopfschraube 52 hindurchgesteckt werden kann. Die in Fig. 7 durch Strichpunktierung angedeutete Kopfschraube 52 wird in einer entsprechenden Gewindebohrung im Dachrahmen 13 eingeschraubt.

Der zweite Teil der Halteeinheit besteht aus einem Bolzen 49 mit einem Bolzenkopf 492 und einem rechtwinklig abgebogenen Bolzenende 491. Der Bolzen 49 ist durch die Öffnung 50 im Mittelteil 482 des Bügels 48 hindurchgesteckt und liegt mit seinem Bolzenkopf 492 auf der Oberseite des Mittelteils 482 auf. Das rechtwinklig abgebogene Bolzenende 491 ragt in das offene Stirnende des unteren Rahmenteils 322 des Rohrrahmens 32 mit Drehspiel hinein, so daß sich der untere Rahmenteil 322 auf den links und rechts in die Stirnenden hineinragenden beiden Bolzenenden 491 zweier Befestigungselemente 37 drehen kann.

Wird auf die Schutzvorrichtung verzichtet oder wird die Vorrichtung hinter einer anderen Sitzreihe zwischen den beiden Halteeinheiten eingespannt, so werden aus den beiden nicht mehr benötigten Halteeinrichtungen die beiden Bolzen 49 herausgezogen und der Bügel 48 in der Lasche 47 gegen den Dachrahmen 13 geklappt.

## Patentansprüche

1. Schutzvorrichtung für Kombifahrzeuge zum Abtrennen eines bestuhlten Fahrgastraums gegenüber einem in Fahrtrichtung dahinterliegenden Laderaum, mit einem mindestens den Bereich zwischen der Oberkante der Bestuhlungsrückenlehnen und dem Fahrzeugdach überspannenden Sicherheitsnetz, das an einem sich über die Fahrzeugbreite erstreckenden oberen Querrohr und an einem dazu parallelen, unteren Querrohr befestigt ist, und mit am unteren Querrohr angreifenden Gurtbändern mit Gurtspannern zum Spannen des unteren Querrohrs nach unten,
**dadurch gekennzeichnet**,
daß das obere Querrohr oberer Rahmenteil (321) eines etwa trapezförmigen Rohrrahmens (32) ist, dessen dazu paralleler unterer Rahmenteil (322) in Fahrtrichtung gesehen hinter dem Sicherheitsnetz (31) lose an diesem anliegt, und daß der Rohrrahmen (32) im Bereich des unteren Rahmenteils (322) mittels sich selbst ausrichtender Befestigungselemente (37) am Fahrzeug mit einem Abstand vom Fahrzeugdach (14) befestigt ist, der kleiner als die Rahmenhöhe bemessen ist.

2. Schutzvorrichtung nach Anspruch 1,
**dadurch gekennzeichnet,**
daß der Abstand des unteren Querrohrs (33) zur Oberkante der Bestuhlungsrücklehnen (20) ungefähr 200 mm beträgt.

3. Schutzvorrichtung nach Anspruch 1 oder 2,
**dadurch gekennzeichnet,**
daß die Befestigungselemente (37) als Drahtseile (38) mit Karabinerhaken (39) zum Einhängen in am Dachrahmen (13) des Fahrzeugs auf beiden Längsseiten vorgesehenen Augenschrauben oder Ösen (24) ausgebildet sind.

4. Vorrichtung nach Anspruch 1 oder 2,
**dadurch gekennzeichnet,**
daß die Befestigungselemente (37) sich jeweils aus einer am Dachrahmen (13) des Fahrzeugs festgelegten Lasche (47) einem in der Lasche (47) in Vertikalrichtung schwenkbaren Bügel (48) und einem im Bügel (48) gehaltenen Bolzen (49) zusammensetzen, der mit einem horizontal sich erstreckenden Bolzenende (491) in das offene Stirnende des unteren Rahmenteils (322) des Rohrrahmens (32) mit Drehspiel hineinragt.

5. Vorrichtung nach Anspruch 4,
**dadurch gekennzeichnet,**
daß die Lasche (47) als umgebogenes Blechteil mit ausgebogenem Auge (471) und der Bügel (48) als etwa T-förmig gebogener Drahtbügel ausgebildet ist, dessen Querteil (481) im Auge (471) schwenkbar einliegt und dessen Mittelteil (482) eine Öffnung zum Durchstecken des Bolzens (49) ausspart, und daß der Bolzen (49) einen auf der Oberseite des Mittelteils aufliegenden Bolzenkopf (492) besitzt und das in den unteren Rahmenteil eingreifende Bolzenende (491) rechtwinklig vom Bolzen (49) abgebogen ist.

6. Vorrichtung nach Anspruch 5,
**dadurch gekennzeichnet,**
daß Mittelteil (482) und Querteil (481) zueinander unter einem stumpfen Winkel abgewinkelt sind.

7. Vorrichtung nach einem der Ansprüche 1 - 6,
**dadurch gekennzeichnet,**
daß die Gurtbänder (40) mit Gurtspannern (41) mit ihrem vom unteren Querrohr (33) abgekehrten Ende an einem zum unteren Querrohr (33) parallel verlaufenden Verankerungsrohr (42) befestigt sind, das mittels Verankerungselemente (43) am Fahrzeugboden (15) oder nahe diesem an der Bestuhlung (16) festsetzbar ist.

8. Vorrichtung nach Anspruch 7,
**dadurch gekennzeichnet,**
daß die Verankerungselemente (43) Haken (44) zum Einhängen in fahrzeugbodenseitige Haltebolzen (26) aufweisen, die direkt oder über Verbindungselemente, vorzugsweise Zugbänder (45), an dem Verankerungsrohr (42) befestigt sind.

9. Vorrichtung nach Anspruch 7 oder 8,
**dadurch gekennzeichnet,**
daß die Verankerungselemente (43) als Drahtbügel (46) ausgebildet sind, die am Verankerungsrohr (42) befestigt, vorzugsweise angeschweißt, und in Formlöchern (27) in Sitzfüßen (21) von Sitzbänken (18) der Fahrzeugbestuhlung (16) eingehängt sind.
